# EUROPÄISCHE PATENTSCHRIFT

(11) **EP 0 694 556 B1**
(45) Veröffentlichungstag und Bekanntmachung des Hinweises auf die Patenterteilung: **09.06.1999**
(21) Anmeldenummer: 95111596.3
(22) Anmeldetag: 20.07.1995
(51) Int. Cl.: C07F 9/40

(54) **Verfahren zur Herstellung von Diestern von Phosphonocarbonsäurederivaten**
Process for the preparation of diesters of phosphonocarboxylic acid derivatives
Procédé de préparation de diesters de dérivés d'acides phosphonocarboxyliques

(30) Priorität: 29.07.1994 DE 4426986; 03.02.1995 DE 19503518
(43) Veröffentlichungstag der Anmeldung: 31.01.1996
(73) Patentinhaber: Ciba Spezialitätenchemie Pfersee GmbH, 86462 Langweid a.L. (DE)
(72) Erfinder: Dermeik, Salman, Dr., D-86157 Augsburg (DE); Wanner, Martina, D-86356 Neusäss (DE); Lemmer, Karl-Heinz, D-86156 Augsburg (DE); Braun, Reinhold, D-86830 Schwabmünchen (DE)

(56) Entgegenhaltungen:
- FR-A- 1 130 222
- US-A- 2 754 319
- US-A- 2 754 320
- US-A- 2 971 019
- CHEMICAL ABSTRACTS, vol. 102, no. 23, 10. Juni 1985, Columbus, Ohio, US; abstract no. 204043, MAKOSZA M ET AL 'Synthesis of phosphonic acid esters in a solid-liquid catalytic two-phase system' & BULL. POL. ACAD. SCI., CHEM. (BPACEQ);84; VOL.32 (3-6); PP.175-9, POL. ACAD. SCI.;INST. ORG. CHEM.; WARSAW; 01-224; POL. (PL)
- DOKL. BOLG. AKAD. NAUK (DBANAD,03668681);89; VOL.42 (12); PP.75-7, HIGHER INST. CHEM. TECHNOL.;DEP. ORG. CHEM.; SOFIA; 1156; BULG. (BG) Yankov L*** et al 'On the addition of dialkyl phosphites to.alpha.,.beta.-unsaturated amides'

## Beschreibung

Die Erfindung betrifft ein Verfahren zur Herstellung von Phosphonoverbindungen der Formel (I) 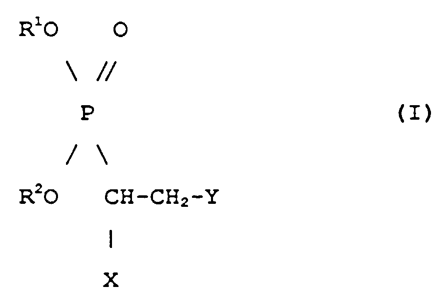 durch Umsetzung eines Phosphits der Formel (II) 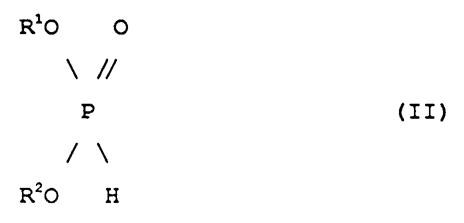 mit einer eine Kohlenstoff-Kohlenstoff-Doppelbindung enthaltenden Verbindung der Formel (III)

X - CH = CH - Y (III)

wobei
R¹ und R² unabhängig voneinander für einen, gegebenenfalls durch ein oder mehrere Chlor- oder Bromatome substituierten, Phenylrest oder Alkylrest mit 1 bis 4 Kohlenstoffatomen stehen,
wobei X für Wasserstoff oder eine Methylgruppe steht und wobei Y für -COOR¹, -CONH₂, -CONHR¹, -CONR¹₂ oder für - C ≡ N steht, worin R¹ die oben genannte Bedeutung besitzt.

Verfahren der genannten Art sind bekannt, z.B. aus der US-A 3 699 192, der US-A 2 971 019 und der US-A 2 754 320. Ähnliche Verfahren sind außerdem in der US-A 2754 319 beschrieben. Daneben betrifft "Comptes rendus de l'Académie bulgare des Sciences", Tome 42, Nr. 12, 1989, Seiten 75 bis 77, ebenfalls Verfahren der obengenannten Art. Aus der letztgenannten Publikation geht auch hervor, daß die Addition von Dialkylphosphiten an alpha, beta-ungesättigte Carbonsäureamide gut durch Natriumalkoholat katalysiert werden kann. In der US-A 2 971 019 wird ein Verfahren der obengenannten Art beschrieben, das in Anwesenheit einer basischen Verbindung durchgeführt wird. Eine Reihe von geeigneten basischen Verbindungen wird darin offenbart. Es wird dem Fachmann aber nicht nahegelegt, mehr als eine basische Verbindung zur Durchführung des Verfahrens einzusetzen.

Die nach dem genannten Verfahren erhaltenen Umsetzungsprodukte der Formel (I), nämlich Diester von Phosphonocarbonsäurederivaten, können Verwendung im Flammschutzsektor finden. Sie können beispielsweise als Ausgangsmaterialien für die Herstellung von aus der Fachliteratur bekannten Produkten eingesetzt werden, die in Form wäßriger Dispersionen für die flammhemmende Ausrüstung von Fasermaterialien, wie Geweben oder Maschenwaren, dienen.

Die aus den oben aufgeführten Publikationen bekannten Verfahren zur Addition von Phosphiten an aktivierte Kohlenstoff-Kohlenstoff-Doppelbindungen in Gegenwart basischer Katalysatoren weisen Nachteile auf. So hat sich herausgestellt, daß die Ausbeuten an gewünschtem Additionsprodukt und die im Reaktionsprodukt vorliegenden Mengen an unerwünschten Nebenprodukten von Art und/oder Menge des gewählten Katalysators abhängen. Die bei bekannten Verfahren verwendeten basischen Katalysatoren können mit Ausgangsverbindungen zu unerwünschten Nebenprodukten reagieren. Am günstigsten unter den bekannten basischen Katalysatoren haben sich für die Erzielung hoher Ausbeuten an gewünschtem Additionsprodukt Alkalimetallalkoholate oder -phenolate erwiesen. Doch auch bei deren Verwendung können noch unerwünschte Nebenreaktionen auftreten, die dazu führen, daß dadurch ein Teil der eingesetzten Katalysatormenge verbraucht wird und die Ausbeute an gewünschtem Additionsprodukt sinkt. Die Folge hiervon ist, daß bei aus dem Stand der Technik bekannten Verfahren zur Erzielung guter Ausbeuten und akzeptabler Reaktionsgeschwindigkeiten höhere Mengen an Katalysator eingesetzt werden müssen, als für die Katalyse der Addition des Phosphits an die Kohlenstoff-Kohlenstoff-Doppelbindung der Verbindung der Formel (III) nötig wäre. Diese Erhöhung der Menge an Katalysator verteuert das Verfahren. Daneben schließt sie noch einen weiteren Nachteil ein. Aus Gründen der Handhabung werden nämlich die häufig als Katalysatoren verwendeten Alkalimetallalkoholate bevorzugt in Form einer Lösung in dem entsprechenden Alkohol eingesetzt, z.B. in Form einer Lösung von Natriummethylat in Methanol. Eine Erhöhung der Menge an Katalysator bedeutet in diesem Fall eine Erhöhung des Methanolgehalts im Reaktionsprodukt. Die destillative Entfernung des Methanols aus dem Reaktionsprodukt oder aus einem Folgeprodukt davon wird durch die erhöhte Menge verlangsamt und verteuert. Eine Nebenreaktion zwischen basischem Katalysator und einer der Ausgangsverbindungen, wie sie bei bekannten Verfahren normalerweise auftritt, hat außerdem zur Folge, daß nicht-umgesetzte Anteile der anderen Ausgangsverbindung im Reaktionsgemisch zurückbleiben, wenn äquivalente Mengen an Verbindungen der Formeln (II) und (III) eingesetzt wurden. Nicht-umgesetzte Anteile an einer der beiden Ausgangsverbindungen im Reaktionsgemisch sind jedoch unter Umständen sehr unerwünscht. Um sie zu vermeiden bzw. auf ein sehr niedriges Niveau zu reduzieren, muß bei den bekannten Verfahren mit einem nicht unerheblichen Überschuß an der anderen Ausgangsverbindung gearbeitet werden. Dies verteuert einerseits das Verfahren und kann andererseits zu einem unerwünscht hohen Anteil an Nebenprodukten führen, die durch Nebenreaktionen unter Beteiligung der im Überschuß vorhandenen Komponente und von basischem Katalysator, z.B. Metallalkoholat, gebildet werden.

Ein weiterer Nachteil der bekannten Verfahren zur Addition von Phosphiten an aktivierte Kohlenstoff-Kohlenstoff-Doppelbindungen hat sich für den Fall herausgestellt, daß die Umsetzung nur in Gegenwart eines Oxids oder Hydroxids eines zweiwertigen Metalls, also ohne Zusatz eines Metallalkoholats oder -phenolats vorgenommen wird. Um eine in der Praxis akzeptable Umsetzungszeit zu erreichen, muß in diesem Falle eine relativ hohe Menge an Oxid oder Hydroxid des Metalls verwendet werden und das Reaktionsgemisch auf eine relativ hohe Temperatur erhitzt werden. Sobald die Reaktion aber gestartet wurde, kann diese wegen der relativ hohen Menge an Oxid oder Hydroxid sowie der Exothermie nur noch schwer kontrolliert werden.

Der vorliegenden Erfindung lag deshalb die Aufgabe zugrunde, ein verbessertes Verfahren für die Addition von Phosphorigsäurediestern (sauren Phosphiten) der Formel (II) an alpha-, betaungesättige Carbonsäurederivate der Formel (III) zu entwickeln, insbesondere ein Verfahren, bei dem geringere Mengen an stark basischen Katalysatoren wie Alkalimetallalkoholaten oder -phenolaten erforderlich sind als bei bekannten Verfahren, das mit äquivalenten oder annähernd äquivalenten Mengen der Ausgangsprodukte der Formeln II und III durchgeführt werden kann und das dennoch akzeptable Reaktionsgeschwindigkeiten aufweist und zu guten Ausbeuten an gewünschtem Reaktionsprodukt und nur geringen Mengen an Nebenprodukten führt.

Die Aufgabe wurde gelöst durch ein Verfahren der oben und in Anspruch 1 genannten Art, bei dem die Umsetzung in Gegenwart sowohl eines basischen Katalysators der Formel MOR¹, worin M für ein Alkalimetall, vorzugsweise für Na oder K, steht und R¹ die oben und in Anspruch 1 genannte Bedeutung besitzt, wobei R¹ in der Formel MOR¹ vorzugsweise für einen unsubstituierten Alkylrest, insbesondere für die Methyl- oder Ethylgruppe steht, als auch in Gegenwart eines Halogenids, Oxids oder Hydroxids eines zweiwertigen Metalls durchgeführt wird.

Das erfindungsgemäße Verfahren weist folgende Vorteile auf:
1. Die Menge an dem als stark basischer Katalysator dienenden Metallalkoholat oder - phenolat kann deutlich niedriger gehalten werden als die bei bekannten Verfahren erforderliche Menge, vielfach um den Faktor 10. Dadurch wird das Verfahren billiger. Je nach Art der gewählten Reaktionsbedingungen kann der Anteil an diesem stark basischen Katalysator noch niedriger sein. Die verwendete Menge an diesem stark basischen Katalysator liegt bevorzugt niedriger als bei bekannten Verfahren, z.B. um den Faktor 5 bis 10 niedriger. Versuche, ähnlich niedrige Mengen an stark basischen Katalysatoren bei bekannten Verfahren, d.h. ohne Zusatz von Halogeniden, Oxiden oder Hydroxiden von zweiwertigen Metallen zu verwenden, führten wegen der Bildung von Nebenprodukten und Verbrauch eines Teils des Katalysators zu schlechten Ausbeuten und hohem Gehalt an nicht-umgesetzten Ausgangsverbindungen im Reaktionsprodukt. Beim erfindungsgemäßen Verfahren dagegen lassen sich auch bei Verwendung deutlich niedrigerer Mengen an Alkalimetallalkoholaten oder -phenolaten als stark basischen Katalysatoren ebenso hohe Ausbeuten oder sogar höhere Ausbeuten an gewünschtem Additionsprodukt (Formel (I)) erzielen als bei bekannten Verfahren.
2. Die durch das erfindungsgemäße Verfahren geschaffene Möglichkeit der Verwendung einer geringeren Menge an aus dem Stand der Technik bekannten stark basischen Katalysatoren (Alkoholaten oder Phenolaten) bewirkt, daß die Bildung von Nebenprodukten stark reduziert wird, durch deren Entstehung wegen einer Reaktion dieses Katalysators mit einer der Ausgangsverbindungen bei bekannten Verfahren ein Teil dieser Ausgangsverbindung verbraucht wird. Es ist daher beim erfindungsgemäßen Verfahren möglich, die Menge an nicht-umgesetzten Ausgangsprodukten im Reaktionsprodukt niedrig zu halten, ohne daß ein größerer Überschuß an einer der Ausgangsverbindungen eingesetzt werden muß. Die Verringerung des bei bekannten Verfahren erforderlichen Überschusses an einer Ausgangsverbindung führt gegenüber bekannten Verfahren zu einem Preisvorteil und dazu, daß weniger unerwünschte Nebenprodukte im Reaktionsgemisch vorliegen.
3. Für den Fall, daß das als basischer Katalysator dienende Alkalimetallalkoholat oder - phenolat in Form einer Lösung eingesetzt wird, bedeutet eine Reduzierung der Menge an diesem Katalysator und damit an Lösungsmittel eine Verringerung des Kosten- und Arbeitsaufwands bei einem späteren Entfernen des Lösungsmittels. Ein Beispiel ist die Verwendung einer Lösung von Natriummethylat in Methanol und spätere Destillation zur Entfernung des Methanols.
4. Die Durchführung des Verfahrens zur Addition von Phosphiten an aktivierte Kohlenstoff-Kohlenstoff-Doppelbindungen in Gegenwart eines Oxids oder Hydroxids eines zweiwertigen Metalls sowie in Gegenwart geringer Mengen eines basischen Katalysators der Formel MOR¹ ermöglicht eine besser kontrollierbare und sicherere Umsetzung der Ausgangsverbindungen in einer in der Praxis akzeptablen Umsetzungszeit verglichen mit einem Verfahren, das nur in Gegenwart eines Oxids oder Hydroxids eines zweiwertigen Metalls, also ohne basischen Katalysator der Formel MOR¹ durchgeführt wird.

Das erfindungsgemäße Verfahren wird nunmehr im einzelnen beschrieben.

Bei dem Verfahren wird ein Phosphit der Formel (II) 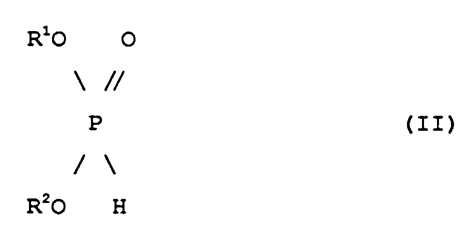 mit einer Verbindung der Formel (III)

X - CH = CH - Y (III)

umgesetzt. Hierbei bedeuten R¹ und R² unabhängig voneinander jeweils einen Phenylrest oder einen gesättigten Alkylrest mit 1 bis 4 Kohlenstoffatomen. Sowohl der Phenylrest als auch die Alkylreste können unsubstituiert sein oder ein oder mehrere Chlor- oder Bromatome als Substituenten aufweisen. Als bevorzugte Verbindungen der Formel (II) werden Phosphite eingesetzt, bei denen R¹ und R² unabhängig voneinander jeweils für eine Methyl- oder Ethylgruppe stehen, z.B. Dimethyl- oder Diethylphosphit. Geeignete Phosphite der Formel (II) sind handelsübliche Produkte.
In der obengenannten Formel (III) steht X für Wasserstoff oder eine Methylgruppe, vorzugsweise für Wasserstoff. Y steht in Formel (III) für einen der folgenden einwertigen Reste:
-COOR¹, -CONH₂, -CONHR¹, -CONR¹₂ oder für - C ≡ N, wobei R¹ die obengenannte Bedeutung besitzt und vorzugsweise für eine Methyl- oder Ethylgruppe steht. Die Verbindungen der Formel (III) sind demnach alpha-, beta-ungesättigte Carbonsäureester, -amide oder -nitrile. Auch die Verbindungen der Formel (III) sind allgemein bekannte, handelsübliche Produkte. Eine für das erfindungsgemäße Verfahren besonders gut geeignete Verbindung der Formel (III) ist Acrylamid.

Wie bereits erwähnt, muß das erfindungsgemäße Verfahren in Gegenwart eines stark basischen Katalysators der Formel MOR¹ durchgeführt werden.

Der für das erfindungsgemäße Verfahren erforderliche stark basische Katalysator der Formel MOR¹ kann aus bekannten Verbindungen ausgewählt werden, die in der Literatur für die Addition von Phosphiten der Formel (II) an Verbindungen der Formel (III) bereits beschrieben sind. M bedeutet hierbei ein Alkalimetall, vorzugsweise Natrium oder Kalium. R¹ besitzt die oben und in Anspruch 1 genannte Bedeutung, vorzugsweise steht R¹ für einen unsubstituierten Alkylrest mit 1 bis 4 Kohlenstoffatomen, insbesondere für eine Methyl- oder Ethylgruppe. Es ist günstig, wenn der Rest R¹ im gewählten Metallalkoholat der gleiche ist wie der, welcher in dem verwendeten Phosphit der Formel (II) vorliegt. Das bedeutet, daß im Fall von Dimethylphosphit als Ausgangsverbindung vorzugsweise Natrium- oder Kaliummethylat als Katalysator eingesetzt wird.

Gemäß Anspruch 1 wird die Umsetzung eines Phosphits der Formel (II) mit einer Verbindung der Formel (III) in Gegenwart eines Halogenids, Oxids oder Hydroxids eines zweiwertigen Metalls durchgeführt. Es wurde überraschenderweise gefunden, daß der Zusatz einer solchen Metallverbindung es ermöglicht, die Menge an Alkoholat oder Phenolat als zusätzlich verwendetem stark basischem Katalysator deutlich zu senken, ohne die Ausbeute an gewünschtem Additionsprodukt zu reduzieren. Die Vorteile dieser Maßnahme sind oben beschrieben.

Als Halogenide von zweiwertigen Metallen werden vorzugsweise Chloride oder Bromide eingesetzt. Die Halogenide, Oxide oder Hydroxide von zweiwertigen Metallen sind bevorzugt entsprechende Verbindungen von Erdalkalimetallen. Besonders gute Ergebnisse werden bei Verwendung von Magnesiumchlorid, Calciumoxid, Calciumhydroxid, Magnesiumoxid oder Magnesiumhydroxid erzielt.

Im Normalfall führt man das erfindungsgemäße Verfahren so durch, daß zuerst das Halogenid, Oxid oder Hydroxid eines zweiwertigen Metalls und nachher der stark basische Katalysator (Alkalimetallalkoholat oder -phenolat) dem Reaktionsgemisch zugesetzt werden.

Die beim erfindungsgemäßen Verfahren durchgeführte Umsetzung kann in einem Lösungsmittel, z.B. einem Alkohol mit 1 bis 3 Kohlenstoffatomen, durchgeführt werden. Weniger bevorzugt als Reaktionsmedium ist Wasser. Vielmehr besteht eine bevorzugte Ausführungsform des erfindungsgemäßen Verfahrens darin, daß alle für die Umsetzung verwendeten Ausgangsverbindungen wasserfrei oder im wesentlichen wasserfrei sind. Auch die verwendeten Halogenide, Oxide oder Hydroxide von zweiwertigen Metallen sind vorzugsweise ganz oder im wesentlichen wasserfrei, enthalten also vorzugsweise kein Kristallwasser. In einer Reihe von Fällen kann es erwünscht sein, wenn das beim erfindungsgemäßen Verfahren entstehende Reaktionsprodukt wenig oder kein Lösungsmittel enthält. Um dies zu erreichen, kann die Umsetzung mit den im wesentlichen lösungsmittelfreien Verbindungen der Formeln (II) und (III) und dem festen Halogenid, Oxid oder Hydroxid des zweiwertigen Metalls ohne Zusatz von Lösungsmittel durchgeführt werden. Aus Gründen besserer Handhabung ist es jedoch auch in diesem Fall oft zweckmäßig, wenn das als stark basischer Katalysator verwendete Alkalimetallalkoholat oder -phenolat als Lösung in einem Lösungsmittel, z.B. Alkohol, eingesetzt wird, zweckmäßigerweise dient derjenige Alkohol als Lösungsmittel, von dem sich das betreffende Alkoholat ableitet.

An Stelle eines einzigen Halogenids, Oxids oder Hydroxids eines zweiwertigen Metalls kann auch ein Gemisch solcher Verbindungen verwendet werden.

Unter bestimmten Reaktionsbedingungen kann der Fall eintreten, daß als unerwünschte Nebenreaktion eine Polymerisation einer Teilmenge der Verbindung X-CH=CH-Y stattfindet. Vielfach läßt sich diese Polymerisation durch Zusatz eines Inhibitors unterdrücken. Geeignet als Inhibitoren sind z.B. Kupfersalze oder Phenole oder substituierte Phenole. Je nach Bedingungen der Umsetzung kann ein Zusatz eines Inhibitors im ppm-Bereich bereits ausreichend sein.

Wie bereits erwähnt, kann das erfindungsgemäße Verfahren mit geringeren Mengen an stark basischem Katalysator durchgeführt werden als Verfahren, die aus dem Stand der Technik bekannt sind. Hierdurch wird das Ausmaß von Nebenreaktionen unterdrückt, und es ist möglich, die Ausgangsverbindungen der Formeln (II) und (III) in äquivalenten oder nahezu äquivalenten Mengen einzusetzen. Dadurch wird vermieden, daß eine der Ausgangsverbindungen im Reaktionsprodukt noch in größeren Mengen in nicht-umgesetzter Form vorliegt. Eine bevorzugte Ausführungsform des erfindungsgemäßen Verfahrens besteht deshalb darin, für die Umsetzung pro Mol an Verbindung der Formel (III), z.B. pro Mol Acrylamid, 0,95 bis 1,07, insbesondere 1,01 bis 1,05 Mol Phosphit der Formel (II) zu verwenden. Diese Mengenangaben beziehen sich auf wasser- und lösungsmittelfreie Produkte. Falls größere Mengen nicht-umgesetzter Ausgangsverbindungen im Reaktionsgemisch, das die Phosphonoverbindung der Formel (I) enthält, nicht stören, können auch größere Abweichungen von äquivalenten Mengen an Ausgangsverbindungen zum Einsatz gelangen, z.B. ein Überschuß oder Unterschuß von 20 %, bezogen auf die äquivalente Menge, an einer der Ausgangsverbindungen der Formel (II) oder (III).

Weiterhin ist es bevorzugt, die Umsetzung so durchzuführen, daß pro Mol an Verbindung der Formel (III) 0,01 bis 0,1, insbesondere 0,015 bis 0,05, Mol an basischem Katalysator der Formel MOR¹, und entweder 0,001 bis 0,05, insbesondere 0,003 bis 0,015, Mol eines Halogenids eines zweiwertigen Metalls oder 0,001 bis 0,15, insbesondere 0,02 bis 0,08 Mol eines Oxids oder Hydroxids eines zweiwertigen Metalls eingesetzt werden. Alle diese Mengenangaben beziehen sich auf wasser- und lösungsmittelfreie Produkte.
Es hat sich gezeigt, daß bereits mit 0,001 bis 0,05 Mol an Halogenid eines zweiwertigen Metalls oder 0,001 bis 0,15 Mol eines Oxids oder Hydroxids eines zweiwertigen Metalls, jeweils bezogen auf 1 Mol an Verbindung der Formel (III), Vorteile gegenüber bekannten Verfahren erzielbar sind. Falls erwünscht, kann auch mit höheren Mengen, z.B. bis zu 0,1 Mol des Halogenids oder bis zu 0,3 Mol des Oxids oder Hydroxids, bezogen auf 1 Mol Verbindung der Formel (III), gearbeitet werden. Eine Steigerung der Menge an Halogenid über 0,1 Mol hinaus oder der Menge an Oxid oder Hydroxid über 0,3 Mol hinaus kann ggf. unerwünscht sein wegen der dabei im Reaktionsprodukt vorliegenden größeren Menge an diesem Halogenid, Oxid oder Hydroxid. Besonders gute Ergebnisse werden erzielt, wenn man für die Umsetzung 0,003 bis 0,015 Mol Halogenid eines zweiwertigen Metalls oder 0,02 bis 0,08 Mol eines Oxids oder Hydroxids eines zweiwertigen Metalls pro Mol Verbindung der Formel (III) verwendet.

Die beim erfindungsgemäßen Verfahren durchgeführte Umsetzung kann ohne Schutzgas unter Luft oder kann, wenn gewünscht, in einer Atmosphäre mit geringerem Sauerstoffgehalt und höherem Stickstoffgehalt, als in der Luft anwesend, durchgeführt werden. In manchen Fällen hat es sich als vorteilhaft erwiesen, den größten Teil der Reaktion, d.h. bis etwa 90 % der Umsetzung stattgefunden haben, unter Luft durchzuführen und anschließend die Umsetzung unter Inertgas zu vollenden.

Bevorzugt wird das erfindungsgemäße Verfahren bei einer Temperatur im Bereich von 45 - 80°C, insbesondere im Bereich von 45 - 65°C durchgeführt. Wegen des exothermen Charakters der unter Verwendung alkalischer Verbindungen durchgeführten Reaktion kann es erforderlich sein, während der Umsetzung oder während eines Teils der Umsetzung zu kühlen, um in dem genannten Temperaturbereich arbeiten zu können.

Eine gut geeignete Methode, das erfindungsgemäße Verfahren durchzuführen, besteht darin, in einem geeigneten Reaktionsgefäß Phosphit der Formel (II), eine Verbindung X - CH = CH - Y der Formel (III) und ein Halogenid, Oxid oder Hydroxid eines zweiwertigen Metalls, insbesondere eines Erdalkalimetalls, vorzulegen und eine Lösung eines Alkalimetallalkoholats in einem Alkohol langsam zutropfen zu lassen. Hierbei sollte das Reaktionsgemisch, z.B. mittels Kühlung und unter Rühren, auf einer Temperatur im Bereich von 45 - 80°C, vorzugsweise 45 - 65°C, gehalten werden. Nach Beendigung der Zugabe der Lösung des Alkoholats wird weitergerührt, bis die Umsetzung abgeschlossen ist, was im Normalfall einige Minuten bis zu mehreren Stunden dauem kann. Falls das nach der Umsetzung erhaltene Reaktionsgemisch nicht klar ist, sondern eine Trübung aufweist, kann vor der Weiterverarbeitung ein Filtrationsschritt durchgeführt werden.

Das beim erfindungsgemäßen Verfahren erhaltene Reaktionsprodukt der Formel (I) kann, wenn gewünscht, isoliert, gegebenenfalls gereinigt, z.B. mittels Umkristallisation und für den vorgesehenen Einsatzzweck verwendet werden. Es kann auch als Ausgangssubstanz für Folgeprodukte dienen, z.B. Produkte, welche sich durch Methylolierung der Verbindung der Formel (I) mittels Formaldehyd oder Paraformaldehyd für den Fall erhalten lassen, daß in Formel (I) Y für -CONH₂ oder -CONHR¹ steht. Diese methylolierten Produkte stellen ausgezeichnete Substanzen für die flammhemmende Ausrüstung von Fasermaterialien wie Textilien dar. Sie werden hierfür häufig in Form wäßriger Dispersionen eingesetzt, die, außer Verbindungen der Formel (I), noch weitere Produkte enthalten können, welche für die Behandlung von Fasermaterialien verwendet werden. Es hat sich gezeigt, daß, wenn geeignete Bedingungen für das erfindungsgemäße Verfahren gewählt wurden, eine anschließende Methylolierung ohne Zusatz eines weiteren Katalysators direkt mit dem erhaltenen Reaktionsgemisch durchgeführt werden kann.

Die gegebenenfalls gewünschte weitere Umsetzung von Verbindungen der Formel (I), z.B. mit Formaldehyd oder Paraformaldehyd zu N-Methylolverbindungen (für den Fall Y = -CONH₂ oder -CONHR¹) kann im Normalfall durchgeführt werden, ohne daß die Verbindung der Formel (I) isoliert wird. Das heißt, es ist normalerweise möglich, direkt nach Durchführung des erfindungsgemäßen Verfahrens die gebildeten Additionsprodukte der Formel (I) in denen Y für -CONH₂ oder -CONHR¹ steht, zu methylolieren, gegebenenfalls nachdem noch ein Lösungsmittel zugesetzt wurde. Diese Methylolierung kann nach aus dem Stand der Technik bekannten Methoden erfolgen, z.B. nach Angaben der US-A 3 374 292. Beispielsweise kann diese Methylolierung unter Verwendung basischer Katalysatoren wie Metallalkoholaten, Metalloxiden, Metallhydroxiden durchgeführt werden. Als Oxide oder Hydroxide kommen hier die entsprechenden Verbindungen von Alkalimetallen oder Erdalkalimetallen in Frage.

Die Erfindung wird nunmehr durch Ausführungsbeispiele veranschaulicht.

### Beispiel 1 (nicht(nicht-erfindungsgemäßes Vergleichsbeispiel)

113,3 g (1,03 Mol) Dimethylphosphit wurden auf 40°C erwärmt. Bei dieser Temperatur wurden 71 g (1,0 Mol) Acrylamid zugegeben und das Gemisch auf 30°C gehalten. Nachdem das Acrylamid vollständig gelöst war, wurden innerhalb 4 Stunden 1,80 g einer 30 %igen Lösung von Natriummethylat in Methanol (entsprechend 0,01 Mol NaOCH₃) langsam zugetropft. Die Temperatur im Reaktionsgemisch wurde während dieser 4 Stunden auf etwa 45°C - 50°C gehalten. Anschließend wurde noch etwa 15 Minuten bei 50°C weitergerührt.

### Beispiele 2 und 3 (nicht(nicht-erfindungsgemäße Vergleichsbeispiele)

Beispiel 1 wurde wiederholt mit dem Unterschied, daß innerhalb 4 Stunden nicht 1,80 g Natriummethylat-Lösung zugetropft wurden, sondem 9,0 g (Beispiel 2) bzw. 18,01 g (Beispiel 3).

### Beispiel 4 (erfindungsgemäß)

Beispiel 1 wurde wiederholt mit dem Unterschied, daß nach dem Auflösen des Acrylamids 0,48 g (0,005 Mol) festes wasserfreies Magnesiumchlorid zugegeben wurden. Das erhaltene Gemisch wurde bei 30°C gerührt, bis eine klare Lösung entstanden war. Anschließend wurde, wie in Beispiel 1 beschrieben, die Natriummethylat-Lösung zugetropft.

### Beispiele 5 und 6 (erfindungsgemäße Beispiele)

Es wurde gearbeitet wie in Beispiel 4 mit dem Unterschied, daß nicht 1,80 g Natriummethylat-lösung verwendet wurden, sondem 9,0 g (Beispiel 5) bzw. 18,01 g (Beispiel 6).

In den bei den Beispielen 1 bis 6 erhaltenen Reaktionsgemischen wurden jeweils der Gehalt an freiem Acrylamid und an Additionsprodukt mittels Hochdruckflüssigkeits-chromatographie (HPLC) bestimmt. Das Additionsprodukt entspricht der oben und in Anspruch 1 genannten Formel (I) mit R¹ = R² = CH₃, X = H und Y = -CONH₂.

Die erhaltenen Ergebnisse zeigt die nachfolgende Tabelle:

| Beispiel Nr. | Gehalt an Additionsprodukt (%) | Gehalt an freiem Acrylamid % | Ausbeute an Addtionsprodukt % |
|---|---|---|---|
| 1 | 2,4 | 36,8 | 2,3 |
| 2 | 85,8 | 1,43 | 92,7 |
| 3 | 81,2 | 0,63 | 91,8 |
| 4 | 57,0 | 11,6 | 58,8 |
| 5 | 87,0 | 0,04 | 94,3 |
| 6 | 85,0 | 0,01 | 96,3 |

Die in der o.a. Tabelle genannten Werte für den Gehalt stellen Gew.%, bezogen auf die Gesamtmenge an Reaktionsprodukt dar. Die Werte in der Spalte "Ausbeute an Additionsprodukt %" geben die ermittelte Ausbeute an Additionsprodukt, bezogen auf die theoretisch mögliche maximale Ausbeute an.

Die Ergebnisse zeigen, daß eine Erhöhung der Menge an NaOCH₃ bei sonst gleichen Bedingungen zu besseren Ergebnissen führt. Sie zeigen auch, daß der Zusatz von Magnesiumchlorid bei gleicher Menge an NaOCH₃ zu einer Erhöhung der Ausbeute an Additionsprodukt und zu einer Reduzierung der Menge an freiem Acrylamid im Endprodukt führt. Dieser Befund gilt unabhängig von der Menge an eingesetztem Katalysator (Natriummethylat), wie der Vergleich zwischen Beispiel 1 und 4 bzw. zwischen Beispiel 2 und 5 bzw. zwischen Beispiel 3 und 6 zeigt. Ferner ergibt sich aus einem Vergleich zwischen Beispiel 3 und Beispiel 5, daß bei Zusatz von Magnesiumchlorid bereits mit 0,05 Mol NaOCH₃ (Beispiel 5) bessere Ergebnisse erhalten werden als mit 0,1 Mol NaOCH₃ ohne Zusatz von MgCl₂ (Beispiel 3).

### Beispiel 7 (erfindungsgemäß)

540,7 g (4,815 Mol) Dimethylphosphit, 320 g Acrylamid (4,5 Mol) und 10 g (0,18 Mol) festes CaO wurden in einem Reaktionsgefäß vorgelegt und auf 65°C aufgeheizt. Es wurde noch 2 Stunden bei 65°C gerührt, dann auf 55°C Innentemperatur gekühlt und anschließend wurden 24,32 g einer 30 %igen Lösung von Natriummethylat in Methanol (= 0,135 Mol NaOCH₃) mit einer solchen Geschwindigkeit zugetropft, daß die Temperatur des Reaktionsgemischs während des Zutropfens ständig bei 65°C +/- 2°C lag.

Nach Beendigung des Zutropfens wurde noch 5 Minuten gerührt.

### Beispiel 8 (nicht-erfindungsgemäßes Vergleichsbeispiel)

Beispiel 7 wurde wiederholt, jedoch ohne Zusatz von Calciumoxid.

### Beispiel 9 (erfindungsgemäß)

Beispiel 7 wurde wiederholt, jedoch wurden statt 10 g (0,18 Mol) CaO 7,18 g (0,18 Mol) festes MgO verwendet.

### Beispiele 10 und 11 (erfindungsgemäß)

Beispiel 7 wurde wiederholt, jedoch wurden statt 10 g CaO 13,2 g (0,18 Mol) feinpulvriges Ca(OH)₂ (Beispiel 10) bzw. 10,4 g (0,18 Mol) festes Mg (OH)₂ (Beispiel 11) verwendet. Das in den Beispielen 9 bis 11 verwendete Ca(OH)₂, Mg(OH)₂ und MgO war jeweils wasserfrei.

### Beispiel 12 (erfindungsgemäß)

In einem Reaktionsgefäß wurden 540,7 g (4,815 Mol) Dimethylphosphit, 320 g (4,5 Mol) Acrylamid und 10 g (0,18 Mol) festes Calciumoxid (CaO) vorgelegt. Bei Raumtemperatur wurde der Sauerstoffgehalt im Reaktionsgefäß durch Teilevakuierung und nachfolgendes Einleiten von Stickstoff auf 7 Gew. % reduziert. Anschließend wurde 90 Minuten bei Raumtemperatur gerührt. Die Temperatur wurde im Verlauf von 2 Stunden in Stufen erhöht, bis die Temperatur der Reaktionsmischung 80°C betrug. Es wurde 2 Stunden bei 80°C Innentemperatur gerührt und dann auf 55°C Innentemperatur abgekühlt. 24,32 g 30 %ige NaOCH₃-Lösung in Methanol (= 0,135 Mol NaOCH₃) wurden so zugetropft, daß das Reaktionsgemisch auf 65°C gehalten wurde. Dann wurde noch 5 Minuten bei 65°C gerührt.

Die Einhaltung der maximalen Temperatur des Reaktionsgemisches wurde in allen Beispielen durch entsprechende langsame Zutropfgeschwindigkeit gesteuert. Dies hatte zur Folge, daß das Zutropfen der NaOCH₃-Lösung jeweils mehrere Stunden in Anspruch nahm.

Das bei den oben beschriebenen Beispielen verwendete Dimethylphosphit und Acrylamid waren von technischer Qualität, Reinheit jeweils etwa 98 %. Das Acrylamid enthielt weniger als 1 Gew.% Wasser. Im Fall von Acrylamid beziehen sich die in den Beispielen angegebenen Mengen auf reines (100 %iges) Acrylamid, im Fall von Dimethylphosphit auf das Produkt mit 98 % Reinheit. In den bei den Beispielen 7 bis 12 erhaltenen Reaktionsgemischen wurden jeweils der Gehalt an freiem Acrylamid und an Additionsprodukt mittels Hochdruckflüssigkeitschromatographie (HPLC) bestimmt. Das Additionsprodukt (Dimethylphosphonopropionamid, (CH₃O)₂P(O)CH₂CH₂CONH₂) entspricht der oben und in Anspruch 1 genannten Formel (I) mit R¹ = R² = CH₃, X = H und Y = -CONH₂.

Die erhaltenen Ergebnisse zeigt die nachfolgende Tabelle:

| Beispiel Nr. | Gehalt an Additionsprodukt (Gew.%) im Reaktionsprodukt | Gehalt an freiem Acrylamid (Gew.%) im Reaktionsprodukt |
|---|---|---|
| 7 | 89,0 | 0,17 |
| 8 | 47,8 | 18,3 |
| 9 | 92,1 | 0,2 |
| 10 | 66,7 | 9,6 |
| 11 | 74,7 | 5,9 |
| 12 | 91,0 | 0,05 |

Die in der o.a. Tabelle genannten Werte für den Gehalt stellen Gew.%, bezogen auf die Gesamtmenge an Reaktionsprodukt dar.

Die Ergebnisse zeigen, daß mit den erfindungsgemäßen Beispielen 7 und 9 bis 12 bessere Ergebnisse erhalten werden als mit Vergleichsbeispiel 8.

## Patentansprüche

1. Verfahren zur Herstellung von Phosphonoverbindungen der Formel (I) 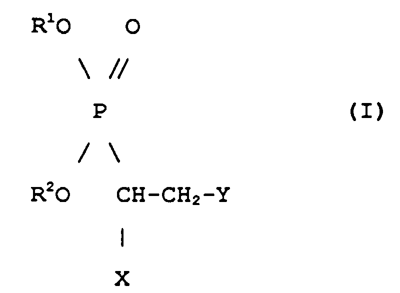 durch Umsetzung eines Phosphits der Formel (II) 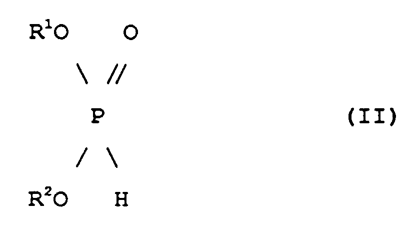 mit einer eine Kohlenstoff-Kohlenstoff-Doppelbindung enthaltenden Verbindung der Formel (III)
X - CH = CH - Y (III)
wobei
R¹ und R² unabhängig voneinander für einen, gegebenenfalls durch ein oder mehrere Chlor- oder Bromatome substituierten, Phenylrest oder Alkylrest mit 1 bis 4 Kohlenstoffatomen stehen,
wobei X für Wasserstoff oder eine Methylgruppe steht und wobei Y für -COOR¹, -CONH₂, -CONHR¹, -CONR¹₂ oder für - C ≡ N steht,
wobei die Umsetzung in Gegenwart sowohl eines basischen Katalysators der Formel MOR¹, worin M für ein Alkalimetall, vorzugsweise für Na oder K, steht und R¹ die oben genannte Bedeutung besitzt, wobei R¹ in der Formel MOR¹ vorzugsweise für einen unsubstituierten Alkylrest, insbesondere für die Methyl- oder Ethylgruppe steht, als auch in Gegenwart eines Halogenids, Oxids oder Hydroxids eines zweiwertigen Metalls durchgeführt wird.

2. Verfahren nach Anspruch 1, dadurch gekennzeichnet, daß eine Verbindung der Formel (II) eingesetzt wird, bei der R¹ und R² unabhängig voneinander jeweils für eine Methyl- oder Ethylgruppe stehen.

3. Verfahren nach Anspruch 1 oder 2, dadurch gekennzeichnet, daß als Verbindung der Formel (III) Acrylamid eingesetzt wird.

4. Verfahren nach einem oder mehreren der Ansprüche 1 bis 3, dadurch gekennzeichnet, daß als Halogenid, Oxid oder Hydroxid eines zweiwertigen Metalls ein Erdalkalimetallchlorid, Erdalkalimetallbromid, Erdalkalimetalloxid oder Erdalkalimetallhydroxid, insbesondere MgCl₂, CaO, MgO, Ca(OH)₂ oder Mg(OH)₂ eingesetzt wird.

5. Verfahren nach einem oder mehreren der Ansprüche 1 bis 4, dadurch gekennzeichnet, daß für die Umsetzung im wesentlichen wasserfreie Produkte verwendet werden.

6. Verfahren nach einem oder mehreren der Ansprüche 1 bis 5, dadurch gekennzeichnet, daß die Umsetzung mit solchen Mengen an Ausgangsverbindungen durchgeführt wird, daß pro Mol an Verbindung der Formel (III) 0,95 bis 1,07, insbesondere 1,01 bis 1,05, Mol an Phosphit der Formel (II) eingesetzt werden, wobei sich diese Mengenangaben auf wasser- und lösungsmittelfreie Produkte beziehen.

7. Verfahren nach einem oder mehreren der Ansprüche 1 bis 6, dadurch gekennzeichnet, daß pro Mol an Verbindung der Formel (III) 0,01 bis 0,1, insbesondere 0,015 bis 0,05, Mol an basischem Katalysator der Formel MOR¹ und entweder 0,001 bis 0,05, insbesondere 0,003 bis 0,015 Mol eines Halogenids eines zweiwertigen Metalls oder 0,001 bis 0,15, insbesondere 0,02 bis 0,08, Mol eines Oxids oder Hydroxids eines zweiwertigen Metalls eingesetzt werden, wobei sich alle diese Mengenangaben auf wasser- und lösungsmittelfreie Produkte beziehen.

## Claims

1. Process for the preparation of phosphono compounds of the formula (I) 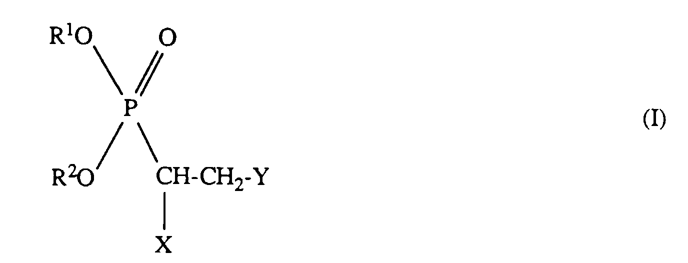 by reaction of a phosphite of the formula (II) 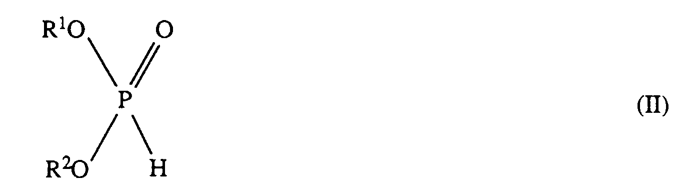 with a compound containing a carbon-carbon double bond, of the formula (III)
X - CH = CH - Y (III)
in which
R¹ and R², independently of one another, are a phenyl radical or alkyl radical having 1 to 4 carbon atoms which is optionally substituted by one or more chlorine or bromine atoms, in which X is hydrogen or a methyl group and in which Y is -COOR¹, -CONH₂, -CONHR¹, -CONR¹₂ or -C≡N,
the reaction being carried out both in the presence of a basic catalyst of the formula MOR¹, in which M is an alkali metal, preferably Na or K, and R¹ has the abovementioned meaning, in which R¹ in the formula MOR¹ is preferably an unsubstituted alkyl radical, in particular the methyl or ethyl group, and in the presence of a halide, oxide or hydroxide of a divalent metal.

2. Process according to Claim 1, characterized in that a compound of the formula (II) in which R¹ and R², independently of one another, are each a methyl or ethyl group is employed.

3. Process according to Claim 1 or 2, characterized in that acrylamide is employed as the compound of the formula (III).

4. Process according to one or more of Claims 1 to 3, characterized in that an alkaline earth metal chloride, alkaline earth metal bromide, alkaline earth metal oxide or alkaline earth metal hydroxide, in particular MgCl₂, CaO, MgO, Ca(OH)₂ or Mg(OH)₂, is employed as the halide, oxide or hydroxide of a divalent metal.

5. Process according to one or more of Claims 1 to 4, characterized in that essentially anhydrous products are used for the reaction.

6. Process according to one or more of Claims 1 to 5, characterized in that the reaction is carried out with amounts of starting compounds such that 0.95 to 1.07, in particular 1.01 to 1.05, mol of phosphite of the formula (II) are employed per mole of compound of the formula (III), these quantities relating to anhydrous and solvent-free products.

7. Process according to one or more of Claims 1 to 6, characterized in that 0.01 to 0.1, in particular 0.015 to 0.05, mol of basic catalyst of the formula MOR¹ and either 0.001 to 0.05, in particular 0.003 to 0.015, mol of a halide of a divalent metal or 0.001 to 0.15, in particular 0.02 to 0.08, mol of an oxide or hydroxide of a divalent metal are employed per mole of compound of the formula (III), all these quantities relating to anhydrous and solvent-free products.

## Revendications

1. Procédé de préparation de composés phosphono de formule (I) 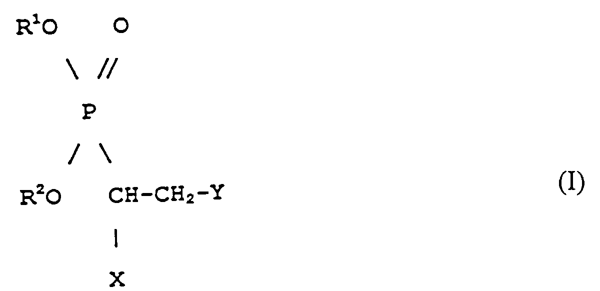 par réaction d'un phosphite de formule (II) 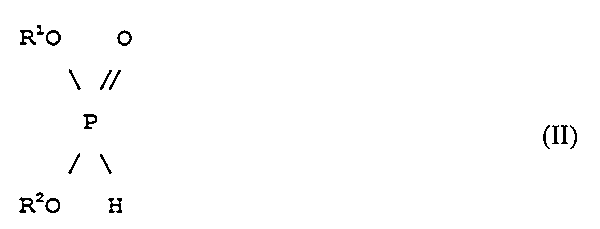 avec un composé contenant une double liaison carbone-carbone de formule (III)
X - CH = CH - Y (III)
où
R¹ et R² représentent indépendamment l'un de l'autre un radical phényle ou un radical alkyle ayant 1 à 4 atomes de carbone éventuellement substitué par un ou plusieurs atomes de chlore ou de brome,
où X représente un hydrogène ou un groupe méthyle et où Y représente -COOR¹, -CONH₂, -CONHR¹, -CONR¹₂ ou -C≡N,
la réaction étant conduite tant en présence d'un catalyseur basique de formule MOR¹, où M représente un métal alcalin, de préférence Na ou K, et R¹ a la signification donnée ci-dessus, où R¹ dans la formule MOR¹ représente de préférence un radical alkyle non substitué, en particulier le groupe méthyle ou le groupe éthyle, qu'en présence d'un halogénure, d'un oxyde ou d'un hydroxyde d'un métal bivalent.

2. Procédé selon la revendication 1, caractérisé en ce qu'on utilise un composé de formule (II), dans laquelle R¹ et R² représentent chacun indépendamment l'un de l'autre un groupe méthyle ou un groupe éthyle.

3. Procédé selon la revendication 1 ou 2, caractérisé en ce qu'on utilise comme composé de formule (III) l'acrylamide.

4. Procédé selon une ou plusieurs des revendications 1 à 3, caractérisé en ce qu'on utilise comme halogénure, oxyde ou hydroxyde d'un métal bivalent un chlorure de métal alcalino-terreux, un bromure de métal alcalino-terreux, un oxyde de métal alcalino-terreux ou un hydroxyde de métal alcalino-terreux, en particulier MgCl₂ , CaO, MgO, Ca(OH)₂ ou Mg(OH)₂.

5. Procédé selon une ou plusieurs des revendications 1 à 4, caractérisé en ce qu'on utilise pour la réaction des produits essentiellement anhydres.

6. Procédé selon une ou plusieurs des revendications 1 à 5, caractérisé en ce que la réaction est conduite avec des quantités de composés de départ telles qu'on utilise par mole de composé de formule (III) 0,95 à 1,07, en particulier 1,01 à 1,05 mole de phosphite de formule (II), ces indications quantitatives se rapportant à des produits anhydres et exempts de solvants.

7. Procédé selon une ou plusieurs des revendications 1 à 6, caractérisé en ce qu'on utilise par mole de composé de formule (III) 0,01 à 0,1, en particulier 0,015 à 0,05 mole de catalyseur basique de formule MOR¹ et soit on utilise 0,001 à 0,05, en particulier 0,003 à 0,015 mole d'un halogénure d'un métal bivalent, soit 0,001 à 0,15, en particulier 0,02 à 0,08 mole d'un oxyde ou hydroxyde d'un métal bivalent, toutes ces indications quantitatives se rapportant à des produits anhydres et exempts de solvants.
